(19) Europäisches Patentamt
European Patent Office
Office européen des brevets

(11) EP 2 008 067 B1

(12) **EUROPEAN PATENT SPECIFICATION**

(45) Date of publication and mention of the grant of the patent:
**14.10.2015 Bulletin 2015/42**

(21) Application number: **06788947.7**

(22) Date of filing: **30.07.2006**

(51) Int Cl.:
***G01J 4/00*** *(2006.01)* ***G01N 21/21*** *(2006.01)*
***G01B 11/02*** *(2006.01)* ***G01B 11/06*** *(2006.01)*

(86) International application number:
**PCT/US2006/029667**

(87) International publication number:
**WO 2007/120171 (25.10.2007 Gazette 2007/43)**

(54) **COMBINED USE OF OSCILLATING MEANS AND ELLIPSOMETRY TO DETERMINE UNCORRELATED EFFECTIVE THICKNESS AND OPTICAL CONSTANTS OF MATERIAL DEPOSITED FROM A FLUID**

KOMBINIERTE VERWENDUNG VON OSZILLATIONSMITTELN UND ELLIPSOMETRIE ZUR BESTIMMUNG DER UNKORRELIERTEN EFFEKTIVEN DICKE UND OPTISCHER KONSTANTEN EINES AUS EINEM FLUID ABGELAGERTEN MATERIALS

UTILISATION COMBINÉE DE MOYENS OSCILLANTS ET D’ELLIPSOMÉTRIE AFIN DE DÉTERMINER UNE ÉPAISSEUR EFFECTIVE NON CORRÉLÉE ET DES CONSTANTES OPTIQUES D’UN MATÉRIAU DÉPOSÉ À PARTIR D’UN FLUIDE

(84) Designated Contracting States:
**AT BE BG CH CY CZ DE DK EE ES FI FR GB GR HU IE IS IT LI LT LU LV MC NL PL PT RO SE SI SK TR**

(30) Priority: **14.04.2006 US 404593**

(43) Date of publication of application:
**31.12.2008 Bulletin 2009/01**

(73) Proprietor: **J.A. WOOLLAM CO. INC.**
**Lincoln,**
**Nebraska 68508 (US)**

(72) Inventors:
- **WOOLAM, John A.**
**Lincoln, NE 68502 (US)**
- **WELCH, James D.**
**Omaha, NE 68124 (US)**

(74) Representative: **Beck Greener**
**Fulwood House**
**12 Fulwood Place**
**London WC1V 6HR (GB)**

(56) References cited:
**EP-A1- 0 779 507 US-A- 5 666 201**
**US-A- 5 963 327 US-B1- 7 030 982**

- **TORBJÖRN TJÄRNHAGE AND GERTRUD PUU: "Liposome and phospholipid adsorption on a platinum surface studied in a flow cell designed for simultaneous quartz crystal microbalance and ellipsometry measurements" COLLOIDS AND SURFACES. B, BIOINTERFACES, vol. 8, no. 1-2, 1996, pages 39-50, XP007914345 ISSN: 0927-7765 [retrieved on 1996-12-10]**
- **KARPOVICH D S AND BLANCHARD G J: "Vapor Adsorption onto Metal and Modified Interfaces: Evidence for Adsorbate Penetration of an Alkanethiol Monolayer on Gold" LANGMUIR, vol. 13, 1997, pages 4031-4037, XP002607905**
- **DEAKIN M R AND MELROY O R: "Monitoring the Growth of an Oxide Film on Aluminum In Situ with the Quartz Crystal Microbalance" J. ELECTROCHEM. SOC., vol. 136, no. 2, February 1989 (1989-02), pages 349-352, XP002607906**
- **RISHPON J ET AL: "Simultaneous ellipsometric and microgravimetric measurements during the electrochemical growth of polyaniline" J. ELECTROANAL. CHEM., vol. 294, 1990, pages 73-85, XP002607907**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **WALLACE D A: "Use of the Quartz Crystal Microbalance for Outgassing and Optical Contamination Measurements" THE JOURNAL OF VACUUM SCIENCE AND TECHNOLOGY, vol. 9, no. 1, 1972, pages 462-466, XP002607908**

## Description

The present invention relates to a method of determining the thickness of a material deposited on a surface and the optical constants of the material.

It is known to use ellipsometry to determine thickness and optical constants of thin film materials. It is also known that ellipsometry provides a correlated product of thickness and refractive index. One known approach to breaking the correlation is to investigate two samples which have different thicknesses of the same material thereupon, and simultaneously perform regression of mathematical models for the two samples onto ellipsometric data obtained from each.

Patents relevant to this field include US patents Nos. 7.030,982, 6,125,687, 4,561,286, and 4,735,081.

"Surface Specific Kinetics of Lipid Vesicle Adsorption Measured With a Quartz Microbalance", Keller et al., Biophysical Journal, Vol. 75, (1998) discusses simultaneous frequency and dissipation measurements performed on QCM which provide an efficient approach to measuring the kinetics of lipid vesicle adsorption and characterizing adsorbed layers.

"Simultaneous Monitoring of Protein Adsorbtion at the Solid-Liquid Interface from Sessile Solution Droplets by Ellipsometry and Axisymmetric Drop Shape Analysis by Profile", Noordmans et al., Colloids and Surfaces B: Biointerfaces 15, (1999) discusses combination of aqueous phase atomic force microscopy, ellipsometry and axisymmetric drop shape analysis by profile (ADSA-P).

"Characterization of PNA and DNA Immobilization and Subsequent Hybridization with DNA Using Acoustic Shear-Wave Attenuation Measurements", Höök et al., Langmuir 17, (2001) discusses combined use of a quartz microbalance and dissipation monitoring to characterize the bound state of single-stranded peptide nucleic acid (PNA) and deoxyribose nucleic acid (DNA).

"Relaxation Dynamics in Ultrathin Polymer Films", Forrest et al., Physical Review E, Vol. 58, No. 2, (1998) describes combined application of Photon Correlation Spectroscopy and Quartz Crystal Microbalance.

"Structural Changes in Hemoglobin During Adsorption to Solid Surfaces: Effects of pH, Ionic Strength, and Ligand Binding", Hook et al., Proc. Natl. Acad. Sci., Vol. 95, (1998) describes application of a quartz microbalance technique to follow Hb adsorption onto a surface. The quartz crystal microbalance (QCM) system is described in this article as comprising a disk shaped, AT-cut piezoelectric quartz crystal with metal electrodes deposited on two faces. In use the crystal is excited to oscillation in the thickness shear mode at its fundamental resonance frequency f, by applying a RF voltage across the electrodes near the resonant frequency. A small mass $\Delta M$ added to the electrode induces a decrease in the resonant frequency $\Delta f$ which is proportional to $\Delta M$ providing that the mass is evenly distributed, does not slip on the electrode and is sufficiently rigid and/or thin to have negligible internal friction. An equation is given which provides a quantitative descriptions:

$$\Delta M = (C\ \Delta f)/n$$

where C (= 17.7 ng $cm^{-2}$ $Hz^{-1}$ at f = 5 MHz), is the mass-sensitivity constant and
n(=1, 3, ...) is the overtone number.

Also disclosed are materials from "Q-SENSE" which disclose quartz micro-balance systems:

"Q-SENSE D300";
"QCM-D Applications, Biosurfaces in Depth";
"Investigating the Sticking Power of Blue Mussels".

The methodology of ellipsometry is described in many references such as US patents 5,373,359, 5,872,630, 5,963,327, 6,353,477, 6,034,777, 6,456,376, 5,706,212, and 5,666,201. An article by Johs titled "Regression Calibration Method for Rotating Element Ellipsometer", Thin Film Solids 234 (1993); an article by Collins titled "Automatic Rotating Element Ellipsometers: Calibration, Operation and Real-time Applications", Rev. Sci. Instrum. 61 (8) (1990), and a book by Azzam & Bashara titled "Ellipsometry and Polarized Light", North-Holland (1977) are also disclosed.

Briefly, ellipsometry causes a polarized beam of electromagnetic radiation to interact with a sample surface and then enter a detector. Changes in polarization state in the beam caused by the sample are represented by ellipsometric PSI and DELTA which are identified by:

$$\rho = rp/rs = \mathrm{Tan}(\Psi)\ \exp(i\Delta)$$

where $r_p$ and $r_s$ are orthogonal components of the beam perpendicular and parallel to, respectively, the sample surface.

A mathematical model of the sample is proposed and a regression procedure applied to convert the PSI and DELTA values to sample representing values such as correlated thickness and optical constant values corresponding to various wavelengths and angles of incidence of the beam to the sample surface.

Tjärnhage T and Puu G, Colloids and Surfaces B: Biointerfaces, vol. 8 (1996), pp. 39-50, Karpovich D S and Blanchard G J, Langmuir, vol. 13 (1997), pp. 4031-4037, Deakin M R and Melroy O R, J. Electrochem. Soc., vol. 136 (1989), pp. 349-352 and Rishpon J et al, J. Electroanal. Chem., vol. 294 (1990), pp. 73-85 describe methods to determine the growth of thin films using ellipsometry to measure film thickness and QCM to measure film mass.

EP-A-0779507 describes the use of an ellipsometer for determining the concentration of a specific gas in a gas mixture.

Wallace D A, The Journal of Vacuum Science and Technology, vol. 9 (1972), pp. 462-466 describes a method of determining a and optical constants of a material deposited on a surface; comprising the steps of:

providing an oscillating means having a first surface, said oscillating means being part of an oscillator circuit such that it is caused to physically vibrate or support resonant or non-resonant acoustic waves when electrical potential is applied thereto;
providing a chamber into which a fluid which contains a depositable material is caused to be present as well as said oscillating means;
simultaneously or sequentially:

allowing said depositable material to deposit onto said first surface of said oscillating means before and/or while it is caused to vibrate and/or support resonant or non-resonant acoustic waves at a frequency and on a second surface of a mirror; and
causing a beam of electromagnetic radiation provided by a refiectometer to interact with said second surface and then enter a data detector;

determining a relationship between a change in the frequency of said oscillating means against the thickness of material deposited thereupon, and providing a mathematical reflectometric model of the oscillating means and deposited material system which includes said thickness, and optical constants of the deposited material;
analyzing a change in frequency of said oscillating means to determine the thickness of said deposited material; and analyzing the data detector provided data using said mathematical reflectometric model to determine optical constants of said deposited material in view of said determined thickness.

The present invention seeks to provide an alternative method of providing uncorrelated determination of both an effective thickness and optical constants of deposited material.

According to the present invention, a method as defined above is characterised in that
the beam of electromagnetic radiation is caused to interact with a surface area of the oscillating means and is a beam of electromagnetic radiation provided by an ellipsometer, and in that
the method further comprises performing regression of the data detector provided data onto a mathematical ellipsometric model of the oscillating means and deposited material system to determine optical constants of said deposited material in view of said determined thickness.

Methods of the invention propose a different approach to breaking the identified correlation involving gaining insight to the "effective thickness", (ie. thickness per se as modified by surface coverage, roughness and/or porosity etc.) of a material caused to accumulate on the surface of an oscillating means, and using that insight to evaluate the product of the "effective" thickness and optical constants via ellipsometric techniques. That is, if an effective thickness of a material is determined by other techniques, and the product of said effective thickness and refractive index of a material is determined by ellipsometric techniques, then the refractive index can be determined by a simple division.

Fig. 1 shows an ellipsometry system.

Fig. 2 demonstrates a system for depositing materials present in fluids onto samples SS which are in a chamber CH, including ports P1, P2 for use in providing fluid thereinto.

Fig. 3 shows that a sample SS which is subjected to ellipsometric investigation has a monitor MON electrically connected thereto which includes excitation and resonant frequency detecting capability.

Fig. 1 illustrates an ellipsometry system. A source of electromagnetic radiation LS provides a beam LB which has a polarization state set by polarizer P and optional compensator C1 prior to interaction with a sample SS. Shown after the sample SS are both reflection and transmission scenarios, each of which comprise an analyzer A and optional compensator C2, C3. Indications of polarization state generator PSG and polarization state detector PSD are shown.

Fig. 2 demonstrates a system for depositing materials onto samples SS from a fluid entered via port P1 or P2. Shown are a chamber CH to which are affixed polarization state generator PSG and polarization state detector PSD, as well ports P1 and P2 for entry and exit of material containing fluids for deposit onto the sample SS, or at least release into the vicinity thereof. It is noted that materials to be deposited can be dielectrics, metals, insulators etc., or can comprise organic materials and the sample SS can have a surface which has an affinity for deposited materials entered in a flow of fluid. Typical application of ellipsometry in a Fig. 2 configuration provides data that identifies a product of thickness and refractive index of, for instance, a thin film deposited on the upper surface of the shown sample SS,

Fig. 3 shows that the sample SS which is subjected to ellipsometric investigation has a monitor MON electrically connected thereto which includes excitation and resonant frequency detecting capability. As disclosed in the background section, a small mass $\Delta M$ added to the sample SS induces a decrease in the resonant frequency $\Delta f$ which is proportional to $\Delta M$.

In general it is to be understood that the chamber CH can be a controlled ambient chamber in which fluid is caused to be present, and can provide any functional material which deposits onto the surface of a sample SS, and optionally onto another surface which is part of an oscillating circuit. In addition, as shown in Fig. 1, material can be caused to be present on a surface of a sample SS outside of a chamber.

It is noted that the change in frequency of an oscillating means, as a function of deposited material, is directly proportional to the mass of the deposited material. Based on surface geometry, this correlates to density and thickness of the material. Further, ellipsometric models can include parameters which correspond to surface coverage, roughness and material porosity. Depending on what is known and what is desired to be evaluated, the various methods of this invention are applied.

Finally, the terminology "fluid" typically means liquid which remains liquid throughout the procedure, although a gas which contains a depositable material can also be used.

## Claims

1. A method of determining an effective thickness of a material deposited on a surface and optical constants of the deposited material; comprising the steps of:

   providing an oscillating means (SS) having a surface with a surface area, said oscillating means (SS) being part of an oscillator circuit (MON) such that it is caused to physically vibrate or support resonant or non-resonant acoustic waves when electrical potential is applied thereto;
   providing a chamber (CH) in which a fluid which contains a depositable material is caused to be present as well as said oscillating means; simultaneously or sequentially:

      allowing said depositable material to deposit onto the surface of said oscillating means (SS) before and/or while it is caused to vibrate and/or support resonant or non-resonant acoustic waves at a frequency; and
      causing a beam of electromagnetic radiation provided by an ellipsometer to interact with said surface area of said oscillating means (SS) and then enter a data detector (DET);

   determining a relationship between a change in the frequency of said oscillating means against the effective thickness of material deposited thereupon, and providing a mathematical ellipsometric model of the oscillating means (SS) and deposited material system which includes said effective thickness, and optical constants of the deposited material;
   analyzing a change in frequency of said oscillating means (SS) to determine the effective thickness of said deposited material based on said relationship; and
   performing regression of the data detector (DET) provided data onto said mathematical ellipsometric model to determine optical constants of said deposited material in view of said determined effective thickness.

2. A method of determining an effective thickness and optical constants of a deposited material as claimed in Claim 1, in which the ellipsometer providing the beam of electromagnetic radiation comprises, in a polarization state generator (PSG), a source (LS) of electromagnetic radiation and polarizing means (P) and in which said data detector (DET) is part of a polarization state detector (PSD) which further comprises analyzer means (A).

3. A method of determining an effective thickness and optical constants of a deposited material as claimed in Claim 1, in which the effective thickness is the thickness per se of the deposited material modified by:

   surface coverage;
   roughness; and
   porosity.

## Patentansprüche

1. Verfahren zum Bestimmen einer effektiven Dicke eines auf eine Oberfläche abgeschiedenen Materials und optischer Konstanten des abgeschiedenen Materials, das die folgenden Schritte umfasst:

   Bereitstellen eines Schwingmittels (SS), das über eine Oberfläche mit einem Oberflächenbereich verfügt, wobei
   das Schwingmittel (SS) Teil eines Schwingkreises (MON) ist, sodass es veranlasst wird, physisch zu schwingen oder resonante oder nichtresonante Schallwellen zu tragen, wenn elektrisches Potential daran angelegt wird;
   Bereitstellen einer Kammer (CH), in der veranlasst wird, dass ein Fluid, das ein abscheidbares Material enthält, ebenso vorhanden ist wie das Schwingmittel;
   gleichzeitig oder nacheinander:

      Ermöglichen, dass das abscheidbare Material auf die Oberfläche des Schwingmittels (SS) abgeschieden wird, bevor und/oder während es zum Schwingen und/oder Tragen resonanter oder nichtresonanter Schallwellen bei einer Frequenz gebracht wird; und
Bewirken, dass ein Strahl einer von einem Ellipsometer bereitgestellten elektromagnetischen Strahlung mit dem Oberflächenbereich des Schwingmittels (SS) wechselwirkt und anschließend in einen Datendetektor (DET) gelangt;

Bestimmen eines Verhältnisses zwischen einer Änderung der Frequenz des Schwingmittels zur effektiven Dicke von darauf abgeschiedenem Material, und
Bereitstellen eines mathematischen ellipsometrischen Modells des Systems aus dem Schwingmittel (SS) und dem abgeschiedenen Material, welches die effektive Dicke umfasst, sowie optischer Konstanten des abgeschiedenen Materials;
Analysieren einer Änderung der Frequenz des Schwingmittels (SS) zum Bestimmen der effektiven Dicke des abgeschiedenen Materials auf Grundlage des Verhältnisses; und
Durchführen einer Regression der vom Datendetektor (DET) bereitgestellten Daten auf das mathematische ellipsometrische Modell zum Bestimmen optischer Konstanten des abgeschiedenen Materials im Hinblick auf die bestimmte effektive Dicke.

**2.** Verfahren zum Bestimmen einer effektiven Dicke und optischer Konstanten eines abgeschiedenen Materials nach Anspruch 1, wobei das den Strahl elektromagnetischer Strahlung bereitstellende Ellipsometer in einem Polarisationszustandsgenerator (PSG) eine Quelle (LS) elektromagnetischer Strahlung und ein Polarisierungsmittel (P) umfasst und wobei der Datendetektor (DET) Teil eines Polarisationszustandsdetektors (PSD) ist, der ferner ein Analysemittel (A) umfasst.

**3.** Verfahren zum Bestimmen einer effektiven Dicke und optischer Konstanten eines abgeschiedenen Materials nach Anspruch 1, wobei die effektive Dicke die Dicke des abgeschiedenen Materials an sich ist, die modifiziert ist durch:

Flächenabdeckung;
Rauheit; und
Porosität.

## Revendications

**1.** Une méthode de détermination d'une épaisseur effective d'une matière déposée sur une surface et de constantes optiques de la matière déposée, comprenant les étapes suivantes :

fourniture d'un dispositif d'oscillation (SS) possédant une surface d'une certaine superficie, ledit dispositif d'oscillation (SS) faisant partie d'un circuit d'oscillateur (MON) tel que, lorsqu'il est soumis à l'application d'un potentiel électrique, il vibre physiquement ou supporte des ondes acoustiques résonantes ou non résonantes ;
fourniture d'une chambre (CH) dans laquelle un fluide contenant une matière déposable doit être présente ainsi que ledit dispositif d'oscillation ;
simultanément ou en séquence :

permettant à ladite matière déposable de se déposer sur la surface dudit dispositif d'oscillation (SS) avant et/ou pendant qu'elle ne soit tenue de vibrer et/ou de supporter des ondes résonantes ou non résonantes à une certaine fréquence ; et
déterminant l'interaction d'un faisceau de rayonnement électromagnétique émis par un ellipsomètre avec ladite superficie dudit dispositif d'oscillation (SS), puis son entrée dans un détecteur de données (DET) ;

détermination d'un rapport entre une variation de la fréquence dudit dispositif d'oscillation et l'épaisseur efficace de la matière déposée dessus, et
fourniture d'un modèle ellipsométrique mathématique du dispositif d'oscillation (SS) et du système de matière déposée comprenant ladite épaisseur efficace et des constantes optiques de la matière déposée ;
analyse d'une variation de la fréquence dudit dispositif d'oscillation (SS) afin de déterminer l'épaisseur efficace de ladite matière déposée sur la base dudit rapport ; et
exécution d'une régression des données fournies par le détecteur de données (DET) sur ledit modèle ellipsométrique mathématique, afin de déterminer des constantes optiques de ladite matière déposée en fonction de ladite épaisseur efficace déterminée.

**2.** Une méthode de détermination d'une épaisseur efficace et de constantes optiques d'une matière déposée selon la revendication 1, dans laquelle l'ellipsomètre fournissant le faisceau de rayonnement électromagnétique comprend, dans un générateur d'état de polarisation (PSG), une source (LS) de rayonnement électromagnétique et un dispositif de polarisation (P), et dans lequel le détecteur de données (DET) fait partie d'un détecteur d'état de polarisation (PSD) comprenant en outre un dispositif d'analyse (A).

**3.** Une méthode de détermination d'une épaisseur efficace et de constantes optiques d'une matière déposée selon la revendication 1, dans laquelle l'épaisseur efficace est l'épaisseur proprement dite de la matière déposée, modifiée par :

le revêtement de la surface ;
la rugosité ; et
la porosité.

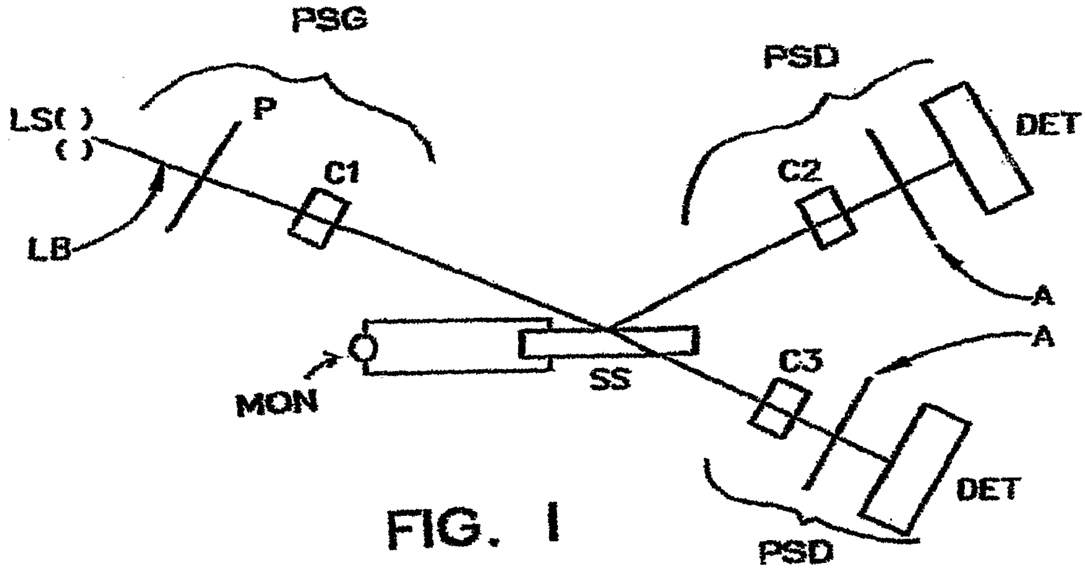


FIG. 1

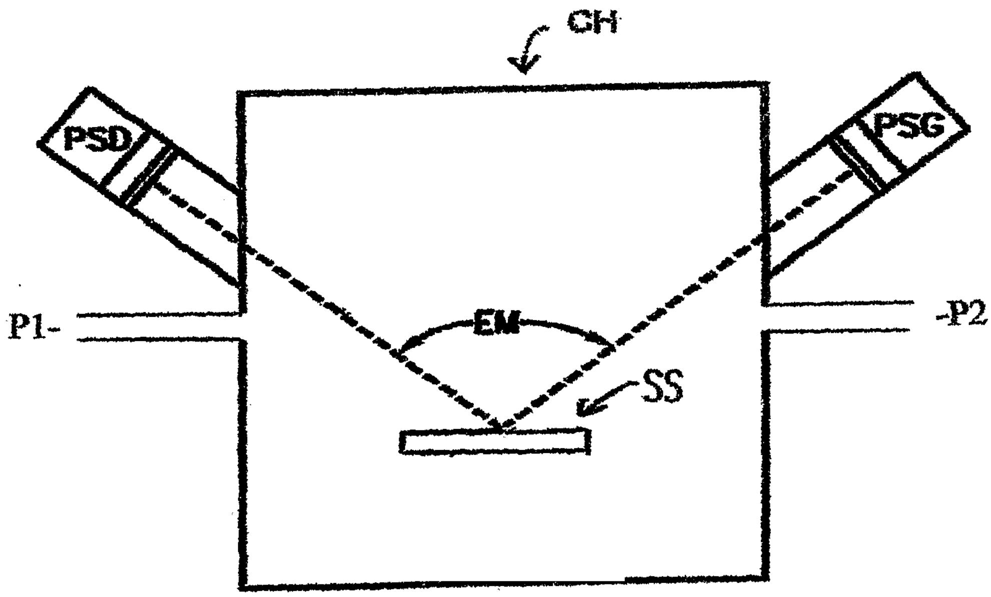


FIG. 2

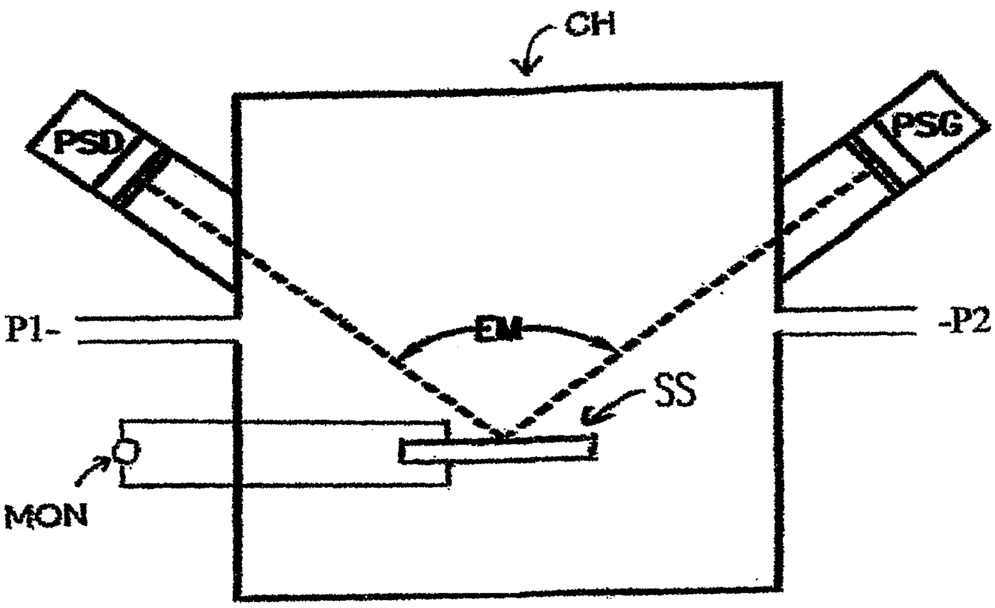


FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7030982 B
- US 6125687 A
- US 4561286 A
- US 4735081 A
- US 5373359 A
- US 5872630 A
- US 5963327 A
- US 6353477 B
- US 6034777 A
- US 6456376 B
- US 5706212 A
- US 5666201 A
- EP 0779507 A


### Non-patent literature cited in the description


- **KELLER et al.** Surface Specific Kinetics of Lipid Vesicle Adsorption Measured With a Quartz Microbalance. *Biophysical Journal,* 1998, vol. 75
- **NOORDMANS et al.** Simultaneous Monitoring of Protein Adsorbtion at the Solid-Liquid Interface from Sessile Solution Droplets by Ellipsometry and Axisymmetric Drop Shape Analysis by Profile. *Colloids and Surfaces B: Biointerfaces,* 1999, 15
- **HÖÖK et al.** Characterization of PNA and DNA Immobilization and Subsequent Hybridization with DNA Using Acoustic Shear-Wave Attenuation Measurements. *Langmuir,* 2001, 17
- **FORREST et al.** Relaxation Dynamics in Ultrathin Polymer Films. *Physical Review E,* 1998, vol. 58 (2
- **HOOK et al.** Structural Changes in Hemoglobin During Adsorption to Solid Surfaces: Effects of pH, Ionic Strength, and Ligand Binding. *Proc. Natl. Acad. Sci.,* 1998, vol. 95
- **JOHS.** Regression Calibration Method for Rotating Element Ellipsometer. *Thin Film Solids,* 1993, 234
- **COLLINS.** Automatic Rotating Element Ellipsometers: Calibration, Operation and Real-time Applications. *Rev. Sci. Instrum.,* 1990, vol. 61 (8
- **AZZAM ; BASHARA.** *Ellipsometry and Polarized Light,* 1977
- **TJÄRNHAGE T ; PUU G.** *Colloids and Surfaces B: Biointerfaces,* 1996, vol. 8, 39-50
- **KARPOVICH D S ; BLANCHARD G J.** *Langmuir,* 1997, vol. 13, 4031-4037
- **DEAKIN M R ; MELROY O R.** *J. Electrochem. Soc.,* 1989, vol. 136, 349-352
- **RISHPON J et al.** *J. Electroanal. Chem.,* 1990, vol. 294, 73-85
- **WALLACE D A.** *The Journal of Vacuum Science and Technology,* 1972, vol. 9, 462-466